Europäisches Patentamt

European Patent Office (11) Numéro de publication: **0 027 760**

Office européen des brevets **B1**

(12) **FASCICULE DE BREVET EUROPEEN**

(45) Date de publication du fascicule du brevet: **15.02.84** (51) Int. Cl.³: **B 60 H 3/04, F 24 F 6/14**

(21) Numéro de dépôt: **80401444.7**

(22) Date de dépôt: **09.10.80**

(54) Climatiseur par évaporation d'eau pour cabine d'engin.

(30) Priorité: **18.10.79 FR 7926112**

(43) Date de publication de la demande:
**29.04.81 Bulletin 81/17**

(45) Mention de la délivrance du brevet:
**15.02.84 Bulletin 84/7**

(84) Etats contractants désignés:
**BE DE GB IT NL SE**

(56) Documents cités:
AU - B - 495 651
DE - B - 1 265 953
FR - A - 851 937
FR - A - 1 450 898
FR - A - 2 246 831
FR - A - 2 420 723
GB - A - 1 504 385
US - A - 2 267 456
US - A - 2 596 324
US - A - 3 472 147
US - A - 3 834 680
US - A - 3 978 174

(73) Titulaire: **Lyon, Roland**
**Couture sur Loir**
**F-41800 Montoire (FR)**

(72) Inventeur: **Lyon, Roland**
**Couture sur Loir**
**F-41800 Montoire (FR)**

(74) Mandataire: **Lavoix, Jean et al,**
**c/o Cabinet Lavoix 2, Place D'Estienne D'Orves**
**F-75441 Paris Cedex 09 (FR)**

Courier Press, Leamington Spa, England.

Climatiseur par évaporation d'eau cabine d'engin.-

La présente invention concerne les climatiseurs du type par évaporation d'eau, permettant d'abaisser la température à l'intérieur des cabines d'engins.

Les dispositifs connus de ce genre comportent le plus souvent une chambre d'évaporation annulaire centrée sur un axe vertical qui porte, d'une part, un ventilateur d'aspiration de l'air extérieur, qui, ainsi, traverse radialement la chambre, et, d'autre part, un disque rotatif entretenant un brouillard d'eau dans cette chambre.

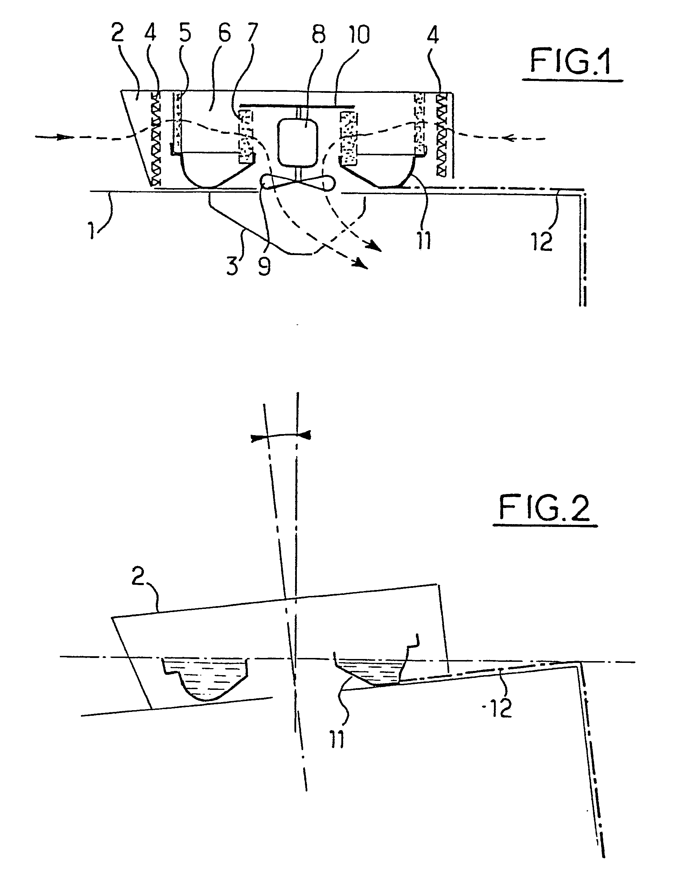

La figure 1 des dessins annexés représente schématiquement un climatiseur de ce type en position d'utilisation sur le toit d'une cabine.

Une ouverture découpée dans le toit 1 de la cabine, assure la communication entre le climatiseur 2 qui est installé sur le toit, et une console de diffusion d'air 3, suspendue en correspondance, à l'intérieur de la cabine L'air aspiré à l'extérieur passe successivement à travers un étage de filtres secs 4, un filtre humide de forme cylindrique 5, et une chambre de forme annulaire 6 dans laquelle est entretenu un brouillard d'eau, se décharge de ses gouttelettes d'eau en traversant un deuxième filtre humide de forme cylindrique 7, et est pulsé à l'intérieur de la cabine où il sort par la console 3. Le moteur électrique 8 à double sortie d'axe, entraîne, d'une part un ventilateur 9 qui assure le mouvement de l'air, d'autre part un disque 10 qui sert à la pulvérisation centrifuge de l'eau qu'il reçoit par une tubulure située au-dessus. L'alimentation en eau, non représentée sur le dessin, comporte principalement un réservoir d'eau et une petite pompe de circulation. L'eau qui ruisselle dans les filtres humides 5 et 7 et qui se condense dans le fond de la chambre annulaire 6, est récupérée dans une cuvette 11; cette cuvette comporte un drain latéral pour la canalisation de retour d'eau 12, laquelle circule au niveau de la base du climatiseur 2, sur le toit de la cabine, et va rejoindre le réservoir.

Un tel dispositif de drainage perd son étanchéité dès que la cabine atteint une certaine inclinaison limite en fonctionnement statique et même bien avant cette position lorsqu'elle subit des à-coups dus au fonctionnement de l'engin, qui ont pour effet de créer des vagues dans la cuvette: dans ce cas, l'eau déborde de la cuvette, ruisselle sur le toit et dans l'intérieur du climatiseur, et s'écoule dans la console 3. La figure 2 schématise l'angle limite d'inclinaison statique.

Par ailleurs, cette disposition implique un ventilateur de type hélicoïde, que son implantation en aval de la zone d'humidification fait travailler en ambiance saturée ce qui nuit à l'endurance du moteur. De plus, ce dispositif conduit à des appareils de grandes dimensions, dont la hauteur est parfois prohibitive lorsque les engins doivent pouvoir passer sous des obstacles.

Il a bien été proposé, par exemple dans le brevet FR A 2 246 831, d'utiliser un ventilateur centrifuge monté à l'extérieur de l'entrée d'un climatiseur comportant une enveloppe munie d'une entrée d'air à une extrémité et d'une sortie d'air à l'extrémité opposée, une chambre d'évaporation à l'intérieur de l'enveloppe, des moyens de propulsion d'air en amont de l'entrée d'air, et des moyens d'alimentation en eau. Une telle réalisation se heurte toutefois à la difficulté de l'obtention dans ce cas d'un brouillard d'eau et d'un contact prolongé air-eau, de sorte que l'efficacité du climatiseur est faible.

La présente invention a pour but de remédier à ces inconvénients grâce à un climatiseur qui, non seulement reste étanche aux fuites malgré les fortes inclinaisons et les forts à-coups des machines, mais tout en utilisant un ventilateur monté en amont, assure dans la chambre d'evaporation un échange efficace air-brouillard d'eau.

Pour attendre ce but, le climatiseur selon l'invention comporte, comme celui décrit dans FR—A 2 246 831 une enveloppe munie à une extrémité d'une entrée d'air à traiter et à son extrémité opposée d'une sortie d'air traité, une chambre d'évaporation à l'intérieur de cette enveloppe, des moyens de propulsion d'air en amont de l'entrée d'air et des moyens d'alimentation en eau, et est caractérisé en ce qu'il comporte à l'intérieur de l'enveloppe, une cloison qui délimite la chambre d'évaporation en la séparant de l'entrée d'air, mais qui est percée d'au moins un petit orifice calibré d'entrée de l'air soufflé dans cette chambre d'évaporation, situé en un point éloigné du fond de la chambre qui forme bac de récupération de l'eau et des moyens de formation de brouillard disposés dans la chambre d'évaporation à proximité mais en dessous de l'orifice et dirigés transversalement au flux d'air accéléré sortant de cet orifice, dont la dimension est calibrée en fonction de la vitesse de cet air, de façon à lui permettre de maintenir le brouillard écarté de l'orifice.

Dans un tel climatiseur, la vitesse du flux d'air traversant chaque orifice calibré est telle qu'elle rend impossible tout passage de fluide à contre-courant par cet orifice, quelle que soit l'inclinaison de l'ensemble. Par contre, l'air et le brouillard d'eau sont entraînés en un mouvement tourbillonnaire assurant un échange efficace, dans la chambre d'évaporation.

Les moyens de propulsion peuvent être constitués par un ou plusieurs ventilateurs centrifuges ou hélicoïdes et sont de toutes façons implantés en amont de l'enveloppe de sorte qu'ils travaillent en atmosphère sèche.

Selon une autre caractéristique de l'invention, la cloison est un boîtier déflecteur de distribution et les orifices calibrés sont percés dans deux parois latérales opposées de ce boîtier.

En outre, l'enveloppe forme à sa partie inférieure, en dessous des orifices calibrés et de la sortie d'air un bac de récupération de l'eau condensée purgé en permanence grâce à un drain.

Selon un mode de réalisation, la pulvérisation de l'eau dans la chambre est obtenue au moyen de buses montées chacune à proximité d'un orifice latéral calibré d'entrée d'air du boîtier.

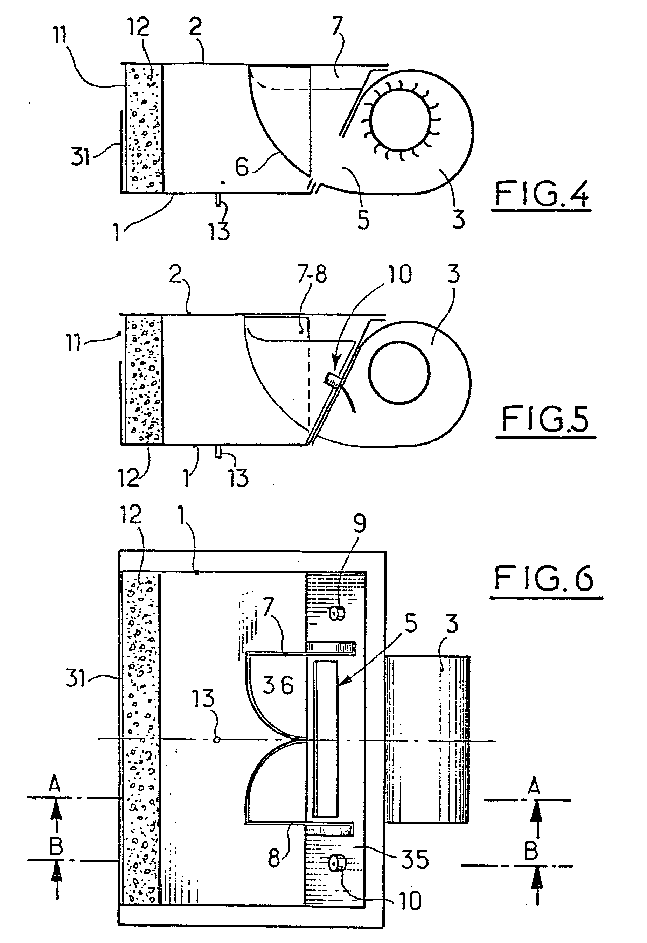

Les figures 3 à 11 des dessins annexés illustrent, à titre d'exemple, un mode de réalisation du dispositif confime à la présente invention.

La figure 3 est une vue en perspective d'un climatiseur selon l'invention, dont le couvercle a été enlevé.

La figure 4 est une vue en coupe suivant la ligne A—A de la figure 6.

La figure 5 est une vue en coupe suivant la ligne B—B de la figure 6.

La figure 6 est une vue de dessus du climatiseur dont le couvercle a été retiré, représenté sur la figure 3.

Les figures 7 et 8 sont des vues schématiques montrant deux variantes de l'installation du climatiseur sur le toit d'une cabine.

La figure 9 est une vue de côté d'un climatiseur monté en position verticale.

Les figures 10 et 11 sont des vues schématiques d'autres modes d'installation du climatiseur sur le toit d'une cabine.

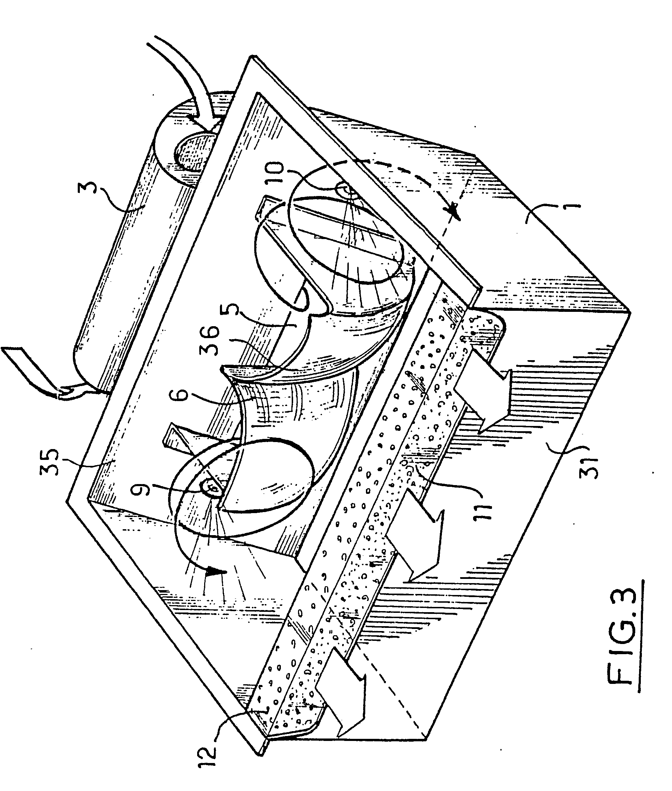

Tel qu'il est représenté sur les dessins, le dispositif comporte une enveloppe formée par un bac 1 et son couvercle 2. Un groupe turbo-ventilateur 3 fixé à la paroi extérieure de ce bac pulse l'air à traiter dans le bac, à travers une ouverture 5. Un boîtier déflecteur 6, assemblé étanchement à l'intérieur de bac devant l'ouverture 5 et muni d'orifices latéraux calibrés 7 et 8, de communication avec le bac, forme une boîte de distribution à l'entrée de la chambre d'évaporation constituée par le reste du bac. De chaque côté de cette boîte est montée une buse de pulvérisation 9, 10, reliée à une alimentation en eau, classique, comprenant notamment un réservoir d'eau et une pompe (non représentés) montés sur l'engin. Les buses 9 et 10 sont supportées par la paroi 35 qui comporte l'ouverture d'entrée d'air 5 et sont dirigées approximativement parallèlement aux orifices calibrés 7, 8 respectivement, de sorte que le brouillard d'eau issu de chaque buse a une direction générale perpendiculaire au filet d'air qui sort par l'orifice calibré, comme le montrent les flèches de la figure 3. De préférence, la paroi 36 du boîtier déflecteur 6 qui fait face à l'ouverture 5, a une forme incurvée, sa concavité étant tournée vers cette ouverture. Elle peut ainsi former une portion de cylindre de génératrice parallèle à cette ouverture, ou, comme représenté sur la figure 3, être également incurvée dans sa partie médiane en direction de cette ouverture et former deux éléments déflecteurs en sens inverse qui guident l'air vers les deux orifices opposés 7 et 8 du boîtier. La boîte de distribution assure ainsi une triple fonction: premièrement, elle dévie le flux d'air reçu du ventilateur et le redresse en le dirigeant de chaque côté, à la rencontre des jets d'eau pulvérisée issus des buses 9 et 10; deuxièmement, elle assure l'étanchéité aux remontées de brouillard d'eau vers l'amont, lequel ne peut franchir la zone des ouvertures calibrées 7 et 8 où la vitesse de l'air est maximale; troisièmement, elle reconstitue la cloison du bac 1, empêchant l'écoulement de l'eau condensée, à travers l'ouverture 5, même en cas de fortes secousses. Le mixage air-eau ainsi obtenu dans le bac qui constitue une chambre d'évaporation, favorise le phénomène d'évaporation jusqu'à saturation, qui s'accompagne du refraîchissement de l'air traité.

Avant de s'échapper du bac 1 par une ouverture 11 ménagée à la partie supérieure de la paroi 31 du bac opposée à la paroi 35, le flux d'air traverse un média séparateur de gouttelettes 12.

Ce média en matériau cellulaire, poreux, fibreux, ou spongieux, perméable à l'air, recouvre la totalité de la face interne de la paroi 31 et assure un contact intime de l'air et de l'eau qui se condense et ruisselle vers le bas. La partie du bac située en dessous des orifices calibrés joue le rôle de bac de récupération de l'eau condensée mais cette eau recueillie au fond du bac est purgée en permanence par un drain 13, et retourne au réservoir et à la pompe d'alimentation.

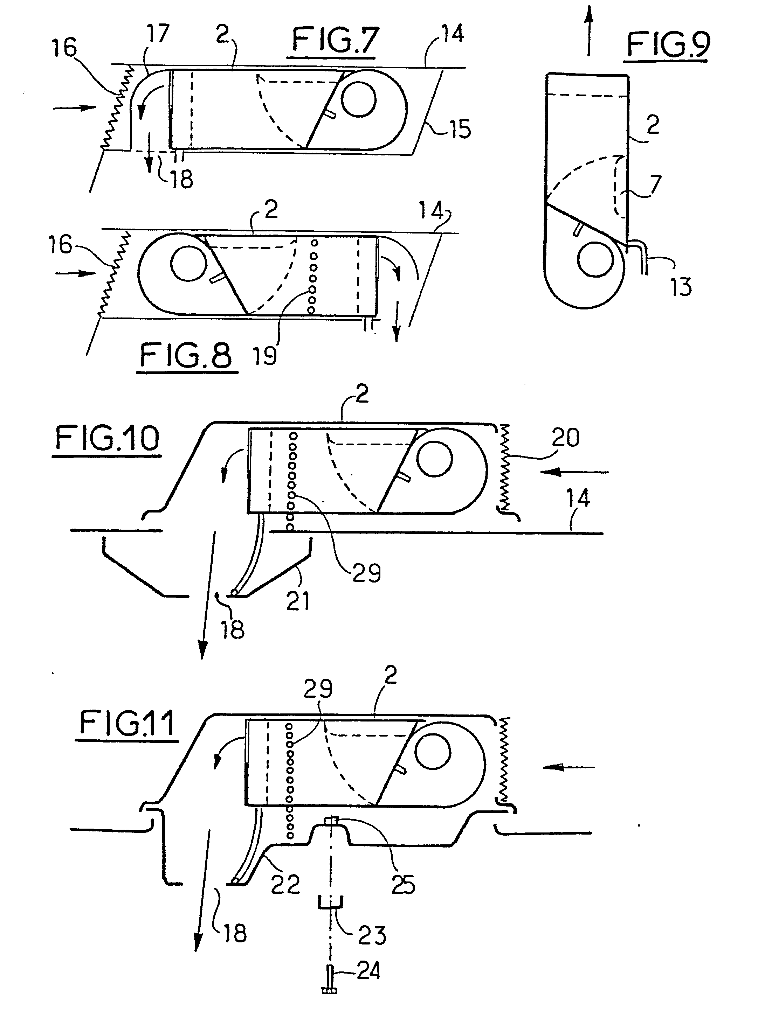

Selon une application de l'invention, représentée sur la figure 7, le couvercle 2 de la chambre est en correspondance avec le toit 14 de la cabine; l'ensemble est installé dans une console 15. L'air à traiter est prélevé à travers un filtre 16, circule latéralement entre le climatiseur et la console pour atteindre le turboventilateur; il est expulsé après traitement, dans un guide 17 en direction des ouïes de diffusion 18.

Selon une autre variante de l'invention, représentée à la figure 8, le couvercle 12 est toujours en correspondance avec le toit 14, mais le climatiseur est installé en position inverse de la précédente. Dans ce cas, l'étanchéité est assurée entre le climatiseur et la console par un joint étanche 19 pour empêcher le recyclage.

Selon une autre variante de l'invention, représentée à la figure 9, le climatiseur est installé en position verticale, le long de la paroi d'habitacle; le couvercle 2 peut alors de surcroît assurer la fonction d'habillage de l'ensemble et carrosser le climatiseur sur sa façade ainsi que ses côtes; le drain de retour d'eau est situé au point le plus bas 13 de la chambre d'évaporation dans cette configuration, les ouvertures calibrées 7, 8 étant limitées à la partie supérieure de la paroi latérale de la boîte 6.

Selon une autre réalisation de l'invention, représentée sur la figure 10, le couvercle 2 est carrossé de manière habiller le dispositif sur ses faces supérieure et latérales et à porter un filtre d'aspiration 20; l'ensemble compact ainsi obtenu s'installe directement sur le toit 14 de la cabine. L'air traité est alors pulsé dans l'habitacle à travers une découpe donnant sur une console 21 portant les commandes et les diffuseurs 18. Une cloison étanche 29, située entre la carrosserie et la chambre d'évaporation ou bac, sépare les zones d'aspiration et de refoulement.

Selon une autre réalisation de l'invention, représentée sur la figure 11, le couvercle 2 est carrossé comme précédemment. La carrosserie ainsi obtenue est assemblée à sa périphérie, à une console 22 portant les commandes et les buses 18. Une cloison étanche 29 empêche le recyclage de l'air. L'ensemble compact monobloc ainsi obtenu forme un climatiseur prêt à être installé directement dans l'ouverture des toits qui possèdent une trappe d'aération ou de sécurité. La fixation du bloc peut dans ce cas être assurée par bridage à l'aide d'une traverse 23 prenant appui sous les bords de l'ouverture, à l'intérieur de la cabine, assemblée par les vis 24, à l'ensemble climatiseur dont la console 22 porte des écrous 25.

Le dispositif, objet de l'invention, peut être utilisé dans tous les cas où l'on recherche l'abaissement de la température ambiante d'un habitacle, ou son humidification ou les deux simultanément, pour en améliorer le confort. Ces résultats sont obtenus sans nécessiter ni compresseur, ni circuit frigorigène. Sa conception lui permet de fonctionner correctement même avec une forte inclinaison et de fortes secousses.

En effet, le turbo-ventilateur, qui peut être remplacé sans inconvénient par un ou plusieurs ventilateurs hélicoïdes ou analogue, non seulement est monté en amont de l'ensemble et travaille en atmosphère sèche, mais peut être étroitement accolé à une extrémité de l'enveloppe, ce qui permet de réaliser un climatiseur de volume réduit. La chambre d'évaporation est rendue beaucoup plus compacte, et la diminution de ses dimensions associée à l'implantation d'un drain de purge à descente verticale immédiate empêche l'eau condensée de séjourner et donc de faire des vagues importantes. Comme, en outre, les orifices calibrés sont situés à la partie supérieure du boîtier déflecteur, l'angle limite de débordement au repos est très senblemement accru. Le risque de débordement est encore réduit et même est pratiquement écarté par le fait que les orifices calibrés sont relativement petits et que les flux d'air qui en sortent ont ainsi une vitesse suffisante pour former une barrière anti-retour s'opposant au passage, par ses orifices, du brouillard d'eau ou de l'eau condensée.

De plus, la compacité de l'ensemble chambre — ventilateur permet de réduire la hauteur du climatiseur.

Bien entendu, le brouillard d'eau peut être formé par des moyens autres que les buses, par exemple au moyen d'un ou de plusieurs disques rotatifs associés à des conduits d'arrivée d'eau. Le nombre des orifices calibrés et des buses, disques ou autres, ainsi que leurs positions relatives pouvant varier en fonction de l'application du climatiseur, quels qu'ils soient, les moyens de formation du brouillard d'eau sont avantageusement asservis à la commande du ventilateur de façon à interdire leur fonctionnement pendant l'arrêt de ce dernier.

Eventuellement, un matériau spongieux à cellules ouvertes, communicantes, peut être disposé au fond du bac afin de stabiliser la surface de l'eau.

Des applications particulièrement intéressantes seront obtenues en climatisation pour cabines d'engins agricoles, travaux publics, manutention, mines, chantiers, tout-terrain, tels que tracteurs, moissonneuses-batteuses, pelles, chargeurs, engins de piste.

## Revendications

1. Climatiseur par évaporation d'eau pour cabines d'engins, de véhicules, ou analogues, comportant une enveloppe munie d'une entrée d'air (5) à une extrémité et d'une sortie d'air (11) à l'extrémité opposée; une chambre d'évaporation à l'intérieur de l'enveloppe; des moyens (3) de propulsion d'air en amont de l'entrée d'air; et des moyens d'alimentation en eau, caractérisé en ce qu'il comporte à l'intérieur de l'enveloppe (1), une cloison (6) qui délimite la chambre d'évaporation en la séparant de l'entrée d'air (5), mais qui est percée d'au moins un petit orifice calibré (7, 8) d'entrée de l'air soufflé dans cette chambre d'évaporation, situé en un point éloigné du fond de la chambre qui forme bac de récupération de l'eau et des moyens de formation de brouillard (9, 10) disposés dans la chambre d'évaporation à proximité mais en dessous de l'orifice (7, 8) et dirigés transversalement au flux d'air accéléré sortant de cet orifice, dont la dimension est calibrée en fonction de la vitesse de cet air, de façon à lui permettre de maintenir le brouillard écarté de l'orifice.

2. Climatiseur suivant la revendication 1, caractérisé en ce que la cloison (6) est un boîtier déflecteur de distribution et les petits orifices (7, 8) d'entrée de l'air soufflé dans la chambre d'évaporation sont percés dans deux parois latérales opposées de ce boîtier.

3. Climatiseur suivant l'une des revendications 1 et 2, caractérisé en ce que le boîtier de distribution (6) est délimité en face de l'ouverture d'entrée (5) par une paroi incurvée dont la concavité est tournée vers cette ouverture.

4. Climatiseur suivant l'une des revendications 1 à 3, caractérisé en ce que la sortie d'air (11) est ménagée à la partie supérieure de la paroi de l'enveloppe opposée à l'ouverture d'entrée d'air (5).

5. Climatiseur suivant l'une des revendications 1 à 4, caractérisé en ce que la sortie est précédée d'un média (12) en matériau cellulaire, poreux, fibreux ou spongieux, perméable à l'air, assurant un contact intime de l'air et de l'eau et formant séparateur de gouttelettes.

6. Climatiseur suivant l'une des revendications 1 à 5, caractérisé en ce que la partie inférieure de l'enveloppe, ou bac de récupération, est munie d'au moins un drain d'évacuation permanente de l'eau condensée.

7. Climatiseur suivant l'une des revendications 1 à 6, caractérisé en ce que l'ouverture d'entrée et la sortie (5, 11) sont ménagées dans deux parois latérales opposées de l'enveloppe, et les moyens de propulsion d'air comprennent un ventilateur fixé contre la paroi percée de l'ouverture d'entrée.

8. Climatiseur suivant l'une des revendications 1 à 6, caractérisé en ce que les ouvertures d'entrée et de sortie (5, 11) sont ménagées respectivement dans les parois inférieure et supérieure de l'enveloppe, un ventilateur de soufflage d'air étant monté sous l'ouverture d'entrée et l'air circulant en courant ascendant.

9. Climatiseur suivant l'une des revendications 1 à 8, caractérisé en ce que les moyens de formation du brouillard d'eau (9, 10) comprennent au moins une buse de pulvérisation correspondant à chaque orifice calibré.

10. Climatiseur suivant l'une des revendications 1 à 8, caractérisé en ce que les moyens de formation du brouillard d'eau comprennent au moins un disque rotatif associé à un conduit d'alimentation en eau.

**Patentansprüche**

1. Durch Verdampfen von Wasser wirksames Klimagerät für Maschinenräume, Fahrzeugräume und dergleichen, welches einen mit einem Lufteintritt (5) an einem Ende und einem Luftaustritt (11) am gegenüberliegenden Ende versehenen Mantel, eine Verdampfungskammer im Inneren des Mantels, Luftvortriebsmittel (3) strömungsoberhalb des Lufteintritts, und Wasserzuführungsmittel aufweist, dadurch gekennzeichnet, daß es im Inneren des Mantels (1) eine Trennwand (6), welche die Verdampfungskammer sie vom Lufteintritt (5) abtrennend begrenzt, aber von wenigstens einer kleinen kalibrierten Eintrittsöffnung (7, 8) für die in diese Verdampfungskammer geblasene Luft durchsetzt ist, die an einer vom Boden der einen Rückgewinnungsbehälter für das Wasser bildenden Kammer entfernten Stelle angeordnet ist, und Nebelbildungsmittel (9, 10), die in der Verdampfungskammer in der Nähe, aber unter der Öffnung (7, 8) angeordnet und quer zum Fluß der beschleunigten Luft, die diese Öffnung, deren Abmessung in Abhängigkeit von der Geschwindigkeit dieser Luft so kalibriert ist, daß sie den Nebel von der Öffnung fernhalten kann, verläßt, gerichtet sind, aufweist.

2. Klimagerät nach Anspruch 1, dadurch gekennzeichnet, daß die Trennwand (6) ein Abkenkgehäuse zur Verteilung ist und daß die kleinen Eintrittsöffnungen (7, 8) für die in die Verdampfungskammer geblasene Luft die beiden gegenüberliegenden seitlichen Wände dieses Gehäuses durchsetzen.

3. Klimagerät nach einem der Ansprüche 1 und 2, dadurch gekennzeichnet, daß das Verteilungsgehäuse (6) gegenüber der Eintrittsöffnung (5) durch eine gekrümmte Wand begrenzt ist, deren Konkavität dieser Öffnung zugekehrt ist.

4. Klimagerät nach einem der Ansprüche 1 bis 3, dadurch gekennzeichnet, daß der Luftaustritt (11) in den oberen Teil der der Lufteintrittsöffnung (5) gegenüberliegenden Wand des Mantels eingelassen ist.

5. Klimagerät nach einem der Ansprüche 1 bis 4, dadurch gekennzeichnet, daß vor dem Austritt ein Medium aus luftdurchlässigem zelligen, porösen, faserigen oder schwammigen Material liegt, welches einen engen Kontakt der Luft und des Wassers gewährleistet und einen Tröpfchenabscheider bildet.

6. Klimagerät nach einem der Ansprüche 1 bis 5, dadurch gekennzeichnet, daß der untere Teil von Mantel bzw. Rückgewinnungsbehälter mit wenigstens einem dauernden Kondenswasserablaß versehen ist.

7. Klimagerät nach einem der Ansprüche 1 bis 6, dadurch gekennzeichnet, daß die Eintrittsöffnung und der Austritt (5, 11) in zwei gegenüberliegende seitliche Wände des Mantels eingelassen sind und daß die Luftvortriebsmittel einen an der von der Eintrittsöffnung durchsetzten Wand befestigten Ventilator umfassen.

8. Klimagerät nach einem der Ansprüche 1 bis 6, dadurch gekennzeichnet, daß die Eintritts- und die Austrittsöffnung (5, 11) in die untere bzw. obere Wand des Mantels eingelassen sind, wobei ein Blasventilator für die Luft unter der Eintrittsöffnung angebracht ist und die Luft im Aufwärtsstrom strömt.

9. Klimagerät nach einem der Ansprüche 1 bis 8, dadurch gekennzeichnet, daß die Wassernebelbildungsmittel (9, 10) jeder kalibrierten Öffnung entsprechend wenigstens eine Zerstäuberdüse umfassen.

10. Klimagerät nach einem der Ansprüche 1 bis 8, dadurch gekennzeichnet, daß die Wassernebelbildungsmittel (9, 10) einer Wasserzuführungsleitung zugeordnet wenigstens eine drehende Scheibe umfassen.

**Claims**

1. An air-conditioner employing the evaporation of water for cabs of machines, vehicles or the like, comprising a case provided with an air inlet (5) at one end and air outlet (11) at the opposite end; an evaporation chamber inside the case; means (3) for driving air upstream of the air inlet; and water supply means, characterised in that it comprises inside the case (1), a partition (6) which defines the evaporation chamber by separating it from the air inlet (5) but which is provided with at least one small calibrated orifice (7, 8) for the entrance of air blown into this evaporation chamber, located at a point remote from the bottom of the chamber which forms a water recovering pan and mist forming means (9, 10) disposed in the evaporation chamber in the vicinity of but below the orifice (7, 8) and directed transversely of the stream of accelerated air issuing from this orifice, the dimension of which is calibrated as a function of the velocity of this air so as to enable it to maintain the mist spaced from the orifice.

2. An air-conditioner according to claim 1, characterised in that the partition (6) is a distribution deflector housing and the small orifices (7, 8) at the entrance of air blown into the evaporation chamber are provided in two opposed lateral walls of this housing.

3. An air-conditioner according to one of the claims 1 and 2, characterised in that the distribution housing (6) is defined in front of the inlet opening (5) by a curved wall whose concavity faces toward this opening.

4. An air-conditoner according to one of the claims 1 to 3, characterised in that the air outlet (11) is provided in the upper part of the wall of the case opposed to the air inlet opening (5).

5. An air-conditoner according to one of the claims 1 to 4, characterised in that the outlet is preceded by a medium (12) of cellular, porous, fibrous or spongy material which is permeable to air and ensures an intimate contact between the air and the water and constitutes a droplet separator.

6. An air-conditioner according to one of the claims 1 to 5, characterised in that the lower part of the case, or recovery pan, is provided with at least one drain for permanently discharging condensed water.

7. An air-conditioner according to one of the claims 1 to 6, characterised in that the inlet opening and the outlet (5, 11) are provided in two opposed lateral walls of the case and the air driving means comprise a fan fixed against the wall provided with the inlet opening.

8. An air-conditioner according to one of the claims 1 to 6, characterised in that the inlet and outlet openings (5, 11) are provided respectively in the lower and upper walls of the case, an air blowing fan being mounted under the inlet opening and the air flowing in a rising current.

9. An air-conditioner according to one of the claims 1 to 8, characterised in that the water mist forming means (9, 10) comprise at least one spraying nozzle corresponding to each calibrated orifice.

10. An air-conditioner according to one of the claims 1 to 8, characterised in that the water mist forming means (9, 10) comprise at least one rotary disc associated with a water supply pipe.

FIG.1

FIG.2

FIG.3

FIG.4

FIG.5

FIG.6

0 027 760

FIG.7

FIG.9

FIG.8

FIG.10

FIG.11

4